# EUROPEAN PATENT APPLICATION

(11) **EP 3 954 672 A1**
(43) Date of publication of application: **16.02.2022**
(21) Application number: 21731369.1
(22) Date of filing: 29.01.2021
(51) Int. Cl.: C05F 3/04, C02F 11/00

(54) **VERMICOMPOST PRODUCTION METHOD**

(71) Applicant: EXCELSIOR INC., Tokyo 154-0023 (JP)
(72) Inventor: ADACHI, Kanichi, Tokyo 154-0023 (JP)
(74) Representative: Winter, Brandl - Partnerschaft mbB
(86) International application number: PCT/JP2021/003325
(87) International publication number: WO 2021/117911

(57) **Abstract**

[Problem]

An object is to realize composting using earthworms of excrement stored under a nonflushing environment such as a temporary toilet.

[Solution]

The present invention provides a method for producing vermicompost, including a step of treating excrement with an excrement treatment agent to provide treated excrement, and a step of subjecting the treated excrement to composting in soil containing earthworms.

## Description

### TECHNICAL FIELD

The present invention relates to a method for producing vermicompost.

### BACKGROUND ART

Earthworms digest organic substances such as garbage, dry leaves and earth to change essential elements such as phosphoric acid and potassium into substance easily absorbable by plants, recrystallizecalcium, and further synthesize vitamins. Therefore, earthworm casting contains a large amount of iodine beneficial to growth of plants.

Besides, earthworm intestines abundantly contain enzymes, and ingested substances are combined with microorganism enzymes to form nutritious casting. Furthermore, a variety of microorganisms eaten by earthworms together with organic substances are activated when passing through the earthworm intestines. In addition, substances not digested within the bodies of the earthworms come out of the bodies directly together with casting. Therefore, earthworm cast contains a large amount of microorganisms assisting growth of plants, and hence is suitably used for improving soil.

As food to be provided to earthworms, garbage, cattle excrement and the like are known (for example, Patent Literatures 1 to 3).

Installation of temporary toilets has recently become common in sites for evacuation at the time of an emergency disaster, as well as resting areas in mountains or on beaches and other places in need thereof. Due to its feature of being able to store human wastes in a tank, a temporary toilet can be easily installed regardless of whether or not a sewage pipe for sending waste water and the like to a sewage disposal plant is laid in ground, and hence is flexible in installation and very convenient for use.

A nonflushing temporary toilet is, however, disadvantageously troublesome because it is necessary to ask professionals or the like to discard the excrement stored in the tank.

Accordingly, the present inventor thought that composting of such excrement using earthworms is eco-friendly and contributes to establishment of a recycling-based society.

### Citation List

### Patent Literature

Patent Literature 1: Japanese Patent Laid-Open No. 2001-220272
Patent Literature 2: Japanese Patent Laid-Open No. 2003-236513
Patent Literature 3: Japanese Patent Laid-Open No. 2006-289333

### SUMMARY OF INVENTION

### Technical Problem

When composting of excrement stored in a tank using earthworms was to be performed based on conventional knowledge, however, an expected effect could not be obtained.

Accordingly, a problem to be solved by the present invention is to realize composting using earthworms of excrement stored under a nonflushing environment particularly such as a temporary toilet.

### Solution to Problem

The present inventor made earnest studies to solve the above-described problem. As a result, it was found that the problem can be solved by providing a method for producing a compost including a step of treating excrement with an excrement treatment agent to provide treated excrement, and a step of subjecting the treated excrement to composting in soil containing earthworms, and thus, the present invention was accomplished.

### Advantageous Effects of Invention

According to one embodiment of the present invention, composting using earthworms can be performed even on excrement stored under a nonflushing environment particularly such as a temporary toilet.

### DESCRIPTION OF EMBODIMENTS

The present invention will now be described. It is noted that the present invention is not limited to only the following embodiments . Besides, the term "X to Y" used herein for expressing a range means "X or more and Y or less" . Furthermore, an operation and measurement of a physical property and the like are performed under conditions of room temperature (20 to 25°C) and a relative humidity RH of 40 to 50% unless specifically stated.

### <Method for Producing Vermicompost>

One embodiment of the present invention provides a method for producing vermicompost, including a step of treating excrement with an excrement treatment agent to provide treated excrement, and a step of subjecting the treated excrement to composting in soil containing earthworms. According to this configuration, composting using earthworms of excrement stored under a nonflushing environment particularly such as a temporary toilet can be realized.

### (Excrement Treatment Agent)

In one embodiment of the present invention, a sum of components contained in the excrement treatment agent (hereinafter also simply referred to as "treatment agent") is 100% by mass.

In one embodiment of the present invention, the excrement treatment agent contains at least one selected from the group consisting of an absorbent polymer, hydrated lime, limestone, sodium bicarbonate, zeolite, lignin, an acidic solid substance, phosphate, bentonite, limonite, an oxidized metal and a sulfurized metal. In particular, in one embodiment of the present invention, the excrement treatment agent contains an absorbent polymer. When an absorbent polymer is contained, the excrement treatment agent absorbs moisture in human wastes, and hence, the treated excrement is easily solidified (easily becomes a jelly form). In one embodiment of the present invention, specific examples of the absorbent polymer include a starch-based absorbent polymer such as starch acrylonitrile graft polymer hydrolysate or starch acrylic acid graft polymer, a cellulose-based absorbent polymer such as a cellulose-acrylonitrile graft polymer or a cellulose-styrenesulfonic acid graft copolymer, a polysaccharide-based absorbent polymer, a protein-based absorbent polymer such as collagen, a polyvinyl alcohol-based absorbent polymer such as a polyvinyl alcohol crosslinked polymer, an acrylic-based absorbent polymer such as a sodium polyacrylate crosslinked material, a crosslinked material of acrylic acid/sodium acrylate copolymer, or a sodium acrylate-vinyl alcohol copolymer, a maleic anhydride-based absorbent polymer, a vinyl pyrrolidone-based absorbent polymer, and a polyether-based absorbent polymer such as a polyethylene glycol/diacrylate crosslinked polymer. One of these absorbent polymers may be singly used, or a combination of two or more of these may be used. Besides, these absorbent polymers may be synthesized, or commercially available products may be used. Examples of the commercially available products include AQUA KEEP (R) SA (manufactured by Sumitomo Seika Chemicals Co., Ltd.), AQUALIC (R) CA (manufactured by Nippon Shokubai Co., Ltd.), SANFRESH (ST-250, ST-100, ST-573), AQUAPEARL (manufactured by San-Dia Polymers Ltd.) and Himosab HS-960 (manufactured by HYMO CORPORATION). In one embodiment of the present invention, the absorbent polymer may be carboxymethyl cellulose. Carboxymethyl cellulose is a derivative of cellulose in which a carboxymethyl group (-CH₂-COOH) is bound to a part of hydroxy groups of a glucopyranose monomer included in a skeleton of cellulose. The carboxymethyl cellulose may be a carboxymethyl cellulose salt. Carboxymethyl cellulose is a thickener that has high affinity for water, and changes to a gel-like high viscosity material when mixed with water. In the present invention, owing to thickening by the treatment agent, an effect of suppressing a bad odor is increased, and thus, the suppression effect can be further retained.

In one embodiment of the present invention, the average particle size of the absorbent polymer is 50 to 1000 µm, 80 to 850 µm, 100 to 600 µm, or 200 to 400 µm. The term "average particle size" used herein means, unless specifically stated, an arithmetic mean value obtained by arbitrarily selecting a statistically reliable number of (or 100, 200, 300 or 1000) particles and measuring the largest diameter of each of the particles with a microscope. It is noted that a desired average particle size may be obtained by appropriately sieving or the like. In one embodiment of the present invention, the amount of particles having a particle size of 106 µm or less is 20% by mass or less, or 15% by mass or less. The amount of particles having a particle size larger than 106 µm and 850 µm or less is 80% by mass or more, or 85% by mass or more. Besides, the amount of particles having a particle size larger than 850 µm is 10% by mass or less, or 5% by mass or less.

In one embodiment of the present invention, the absorbent polymer is contained in the excrement treatment agent in an amount of 1 to 100% by mass, 5 to 90% by mass, 15 to 80% by mass, 20 to 70% by mass, or 30 to 60% by mass. When the amount falls in such a range, an effect of solidifying a moisture in human wastes to prevent diffusion is obtained.

The excrement treatment agent in one embodiment of the present invention contains lignin and bentonite. The excrement treatment agent in one embodiment of the present invention contains limonite, lignin and bentonite. The excrement treatment agent in one embodiment of the present invention contains limonite, lignin and bentonite, and when the agent further contains hydrated lime, the content of hydrated lime is 12% by mass or less (or 10% by mass or less) . Owing to this configuration, not only a fecal odor but also an ammonia odor can be suppressed in various settings. When the content of hydrated lime is set to 12% by mass or less in the excrement treatment agent, and limonite, lignin and bentonite are used in combination, not only a fecal odor but also an ammonia odor can be efficiently suppressed.

Limonite has a chemical composition of FeO(OH) •nH₂O, and may contain hematite (Fe₂O₃), clay mineral, manganese (II) oxide and the like as impurities in some cases. When limonite is contained, bad odor components of feces, that is, mercaptan, methyl mercaptan, a sulfur-based compound such as hydrogen sulfide , and a fatty acid-based compound can be decomposed and adsorbed. In one embodiment of the present invention, limonite is contained in the excrement treatment agent in an amount of 0.1 to 80% by mass, 1 to 60% by mass, 5 to 30% by mass, or 10 to 25% by mass. When the amount falls in such a range, decomposition, adsorption or removal of a sulfur-based compound or a fatty acid-based compound can be efficiently performed. In one embodiment of the present invention, the volume average particle size (D50) of limonite obtained by particle size distribution measurement is 0.1 to 200 µm, 1 to 150 µm, 5 to 100 µm, or 10 to 50 µm. When the particle size falls in such a range, the expected effect of the present invention can be efficiently attained. Limonite can be freely selected from commercially available products . Examples include LMB50 and LMB300 (both manufactured by Japan Limonite Co., Ltd.).

In one embodiment of the present invention, the excrement treatment agent contains lignin. Lignin is a high-molecular phenolic compound involved in lignification of higher plants, and is designated also as mokushitsuso (in Japanese) . Lignin can exhibit an effect of adsorbing and decomposing ammonia and other odorous substances. In one embodiment of the present invention, lignin is contained in the excrement treatment agent in an amount of 0.1 to 80% by mass, 1 to 50% by mass, 3 to 48% by mass, 5 to 45% by mass, 8 to 42% by mass, 8 to 40% by mass, 9 to 35% by mass, 3 to 20% by mass, or 3 to 10% by mass. When the amount falls in such a range, an effect of efficiently adsorbing ammonia and other odorous substances is obtained. In one embodiment of the present invention, the average particle size of lignin is 1 to 500 µm, 5 to 300 µm, 10 to 100 µm, or 40 to 80 µm. When the particle size falls in such a range, ammonia and other odorous substances are efficiently adsorbed. Lignin can be freely selected from commercially available products. Examples include SAN X and VANILLEX (both manufactured by Nippon Paper Industries Co., Ltd.).

In one embodiment of the present invention, the excrement treatment agent contains bentonite. Bentonite contains a large amount of layered aluminum phyllosilicate, and has properties of high viscosity, adhesiveness, water absorption and adsorption. Bentonite adsorbs cations of ammonia and the like, suppresses generation of ammonia and other odorous substances and adsorbs these . Besides, when bentonite is combined with lignin, the cation adsorption effect of bentonite and an unclarified complicated three-dimensional network structure of lignin work together, so that an effect of suppressing generation of ammonia and other odorous substances and adsorbing and decomposing these can be more definitely exhibited. In one embodiment of the present invention, bentonite is contained in the excrement treatment agent in an amount of 0.1 to 60% by mass, 0.5 to 50% by mass, 2 to 40% by mass, 3 to 30% by mass, 4 to 25% by mass, 5 to 20% by mass, or 6 to 15% by mass. When the amount falls in such a range, the effect of efficiently adsorbing ammonia and other odorous substances is obtained. In one embodiment of the present invention, the average particle size of bentonite is 0.05 to 300 µm, 0.5 to 200 µm, 10 to 150µm, 50 to 148 µm, or 80 to 145 µm. In one embodiment of the present invention, the volume average particle size (D50) of bentonite is 0.05 to 300 µm, 0.5 to 200 µm, 10 to 150 µm, 50 to 148 µm, or 80 to 145 µm. In one embodiment of the present invention, the mode diameter of bentonite is 0.05 to 300 µm, 0.5 to 200 µm, 10 to 150 µm, 50 to 148 µm, or 80 to 145 µm. When the diameter falls in such a range, the bentonite has a technical effect of efficiently adsorbing ammonia and other odorous substances . Bentonite can be freely selected from commercially available products . Examples of the commercially available products of bentonite include KUNIPIA-F, KUNIMINE F, MOISTNITE S and MOISTNITE U (all manufactured by Kunimine Industries Co., Ltd.), and 250SA-B (manufactured by Hoyo Bentonite Kogyo K.K.).

In one embodiment of the present invention, the excrement treatment agent contains hydrated lime. In one embodiment of the present invention, the content ratio of hydrated lime in the excrement treatment agent is 15% by mass or less, 13% by mass or less, 12% by mass or less, 11% by mass or less, 9% by mass or less, 7% by mass or less, 5% by mass or less, or 3% by mass or less. The lower limit is 0% by mass, and may be 1% by mass or more, 2% by mass or more, or 3% by mass or more. When hydrated lime is contained, an effect of suppressing a fecal odor and killing microorganisms is obtained. When limonite, lignin and bentonite (particularly, limonite) are further added, a fecal odor and an ammonia odor can be suppressed. In one embodiment of the present invention, the average particle size of hydrated lime is 10 µm or more, or 50 µm or more. In one embodiment of the present invention, the average particle size of hydrated lime is 1000 µm or less, 500 µm or less, 300 µm or less, 200 µm or less, or 150 µm or less. In one embodiment of the present invention, the average particle size of hydrated lime is 10 to 300 µm, 20 to 150 µm, or 50 to 100 µm. When the particle size falls in such a range, the hydrated lime has a technical effect of removing a sulfur-based compound, that is a bad odor substance in feces. In one embodiment of the present invention, hydrated lime is one passing through a 100-mesh plain weave wire mesh. As a method for preparing hydrated lime, it is preferable to purchase a commercially available product, and for example, those manufactured by Ube Material Industries, Ltd. and the like are preferred.

In one embodiment of the present invention, the excrement treatment agent contains 11 to 60% by mass of limonite, 5 to 38% by mass of lignin, 1 to 30% by mass of bentonite, 20% by mass or more of the absorbent polymer, and hydrated lime, the content of the hydrated lime is 12% by mass or less, and the lignin is not contained in the form of a wood flour.

In one embodiment of the present invention, the excrement treatment agent contains an acidic solid substance. In one embodiment of the present invention, the acidic solid substance is at least one selected from the group consisting of acetic acid, citric acid, isocitric acid, malic acid, tartaric acid, lactic acid, gluconic acid, succinic acid, glycolic acid, oxalic acid, maleic acid, maleic anhydride, itaconic acid, benzoic acid, hydroxybenzoic acid, nitrilotriacetic acid, carbonic acid, salicylic acid, fumaric acid, adipic acid, phthalic acid, terephthalic acid, inosinic acid, guanylic acid, glutamic acid, erythorbic acid, sorbic acid, polyglutamic acid, benzenesulfonic acid, toluenesulfonic acid, phytic acid, phosphoric acid, phosphonic acid, boric acid, sodium citrate, sodium benzoate, monosodium fumarate, sodium 5' -inosinate, sodium 5'-guanylate, disodium 5'-guanylate, monosodium glutamate, sodium erythorbate, potassium sorbate, sodium dihydrogen phosphate, sodium hydrogen sulfate, potassium hydrogen sulfate, ammonium hydrogen sulfate, potassium dihydrogen phosphate, disodium dihydrogen pyrophosphate, acidic aluminum tripolyphosphate, acidic sodium hexametaphosphate, sodium ultraphosphate, aluminum sulfate, sulfamic acid, alum, and grass peat (peat) containing humic acid. In one embodiment of the present invention, the acidic solid substance is a combination of one selected from the group consisting of acetic acid, citric acid, isocitric acid, malic acid, tartaric acid, lactic acid, gluconic acid, succinic acid, glycolic acid, oxalic acid, maleic acid, maleic anhydride, itaconic acid, benzoic acid, hydroxybenzoic acid, nitrilotriacetic acid, carbonic acid, salicylic acid, fumaric acid, adipic acid, phthalic acid, terephthalic acid, inosinic acid, guanylic acid, glutamic acid, erythorbic acid, sorbic acid, polyglutamic acid, benzenesulfonic acid, toluenesulfonic acid, phytic acid, phosphoric acid, phosphonic acid, and boric acid, and one selected from the group consisting of sodium citrate, sodium benzoate, monosodium fumarate, sodium 5'-inosinate, sodium 5'-guanylate, disodium 5'-guanylate, monosodium glutamate, sodium erythorbate, potassium sorbate, sodium dihydrogen phosphate, sodium hydrogen sulfate, potassium hydrogen sulfate, ammonium hydrogen sulfate, potassium dihydrogen phosphate, disodium dihydrogen pyrophosphate, acidic aluminum tripolyphosphate, acidic sodium hexametaphosphate, sodium ultraphosphate, aluminum sulfate, sulfamic acid, alum, and grass peat (peat) containing humic acid. In one embodiment of the present invention, the acidic solid substance is at least one of sodium dihydrogen phosphate and humic acid.

In one embodiment of the present invention, the excrement treatment agent contains zeolite. The term "zeolite" is a generic name for minerals designated as boiling stones, and about 40 types of natural zeolites have been discovered. When zeolite is contained, an effect of adsorbing an ammonia component contained in excrement (such as human wastes) for deodorization is obtained. When zeolite is contained, pores of zeolite can take a bad odor therein to suppress the bad odor. Zeolite may be natural or artificial, and from the viewpoint of availability, artificial zeolite is preferred. Zeolite used in the present invention is preferably zeolite designated as mordenite including an infinitesimal void having a size of 5.5 to 8 Angstrom, which is slightly larger than a water or nitrogen molecule, formed in a tunnel shape. When a commercially available product of zeolite is purchased, Zeolite 2460, Zeolite 60, Zeolite CP, Zeofill (R) series manufactured by SHIN TOHOKU Chemical Industry Co., Ltd. and the like are preferred. The average particle size of zeolite is not particularly limited, and is about 5 µm to 1.5 mm, about 8 µm to 1.2 mm, or about 10 to 100 µm. Zeolite contains SiO₂ (silicon oxide), Al₂O₃ (aluminum oxide), CaO (calcium oxide), Na₂O (sodium oxide), K₂O (potassium oxide), Fe₂O₃ (iron oxide), MgO (magnesium oxide), adhesive water (H₂O), bonding water (H₂O) and the like respectively in amounts of about 70.5% by mass, 11.3% by mass, 2.6% by mass, 1.6% by mass, 1.3% by mass, 0.7% by mass, 0.1% by mass, 8.0% by mass, and 3.9% by mass, and needless to say, the composition is not limited to this, but zeolite may be prepared with the amounts of the respective components increased/decreased by about 0.1 to 20% to obtain a sum of 100%. In the present invention, for example, zeolite of K[AlSi₂O₆] may be used. The content of zeolite is, with respect to a total mass of the excrement treatment agent, about 0.1 to 50% by mass, 1 to 30% by mass, about 2 to 20% by mass, or 2 to 10% by mass. When the content falls in such a range, the effect of suppressing a bad odor can be further increased, and the resultant is economical in cost.

In one embodiment of the present invention, the excrement treatment agent contains sodium bicarbonate. The average particle size of sodium bicarbonate is not particularly limited. When sodium bicarbonate is used, the amount thereof to be used can be appropriately adjusted depending on the type and the shape of the sodium bicarbonate, and a component of a substance to be treated (such as human wastes), so as to obtain the effect of suppressing a bad odor.

In one embodiment of the present invention, the oxidized metal embraces zinc oxide. Zinc oxide is an oxide of zinc represented by ZnO, and has a deodorizing effect by adsorbing a smell component of ammonia, a sulfide and the like. Zinc oxide can be freely selected from commercially available products. Examples include grade I zinc oxide (manufactured by HAKUSUI TECH CO.,LTD.), grade II zinc oxide (manufactured by HAKUSUI TECH CO., LTD.), Pazet AB, Pazet AK and Pazet CK (all manufactured by HAKUSUI TECH CO.,LTD.). When zinc oxide is used, the amount thereof to be used can be appropriately adjusted depending on the type and the shape of the zinc oxide, and a component of a substance to be treated (such as human wastes), so as to obtain the deodorizing effect. The content of zinc oxide is, with respect to the total mass of the excrement treatment agent, about 0.01 to 30% by mass, 0.1 to 20% by mass, or about 0.2 to 10% by mass.

In one embodiment of the present invention, the excrement treatment agent may be pelletized with a binder such as water, PVA, cellulose, water-soluble cellulose, water-soluble carboxymethyl cellulose, or sodium alginate. In other words, in one embodiment of the present invention, the excrement treatment agent is a clumpy excrement treatment agent. Besides, in one embodiment of the present invention, the excrement treatment agent may be in the form of a granular treatment agent or a clumpy excrement treatment agent obtained by employing technique described in Japanese Patent Laid-Open No. 2013-6137 or Domestic re-publication of PCT international application 2011/162244. In one embodiment of the present invention, the excrement treatment agent contains a lubricant. The lubricant is used, in producing a clumpy excrement treatment agent, particularly for attaining smooth feeding to a motor of a tablet press . Therefore, with respect to the type of the lubricant, conventionally known lubricants can be appropriately selected or combined for use. For example, an ester-based lubricant, a silicon-based lubricant, stearic acid ester, calcium stearate, potassium stearate, calcium zinc or the like is used. The content of the lubricant is, with respect to the total mass of the excrement treatment agent, about 0.3 to 5% by mass, about 0.8 to 4.5% by mass, or about 0.8 to 3% by mass.

In one embodiment of the present invention, the excrement treatment agent has a diameter of 3 to 100 mm, or 5 to 50 mm.

In one embodiment of the present invention, the excrement treatment agent is produced with a desk-top manual tablet press. In order to produce a clumpy excrement treatment agent with the desk-top manual tablet press (having one mortar and one pestle), first, components to be solidified are manually put in the pestle with a spoon. Thereafter, a lever is manually (hydraulically) lowered to apply a pressure to solidify the components, and thus, the clumpy excrement treatment agent is produced. When, for example, a pestle having a small diameter (diameter of 7 mm: upper and lower disk type) is used, since a higher pressure can be applied per area when the diameter is smaller, even a material difficult to solidify is likely to be solidified. On the other hand, when, for example, a pestle having a large diameter (diameter of 15 mm: upper and lower plate type) is used, since a pressure applied per area is smaller when the diameter is larger, such a pestle is disadvantageous for a material difficult to be solidified but is advantageous in feeding to the pestle owing to the large diameter, and thus productivity is improved.

In one embodiment of the present invention, the excrement treatment agent is produced with a continuous tablet press. The continuous tablet press may be or may not be a direct compression type, and a direct compression type that can improve productivity is preferably employed from the viewpoint of saving labor for pretreatment. Besides, a lubricant is preferably added so that a fine powder material can be easily fed. On the other hand, when a pretreatment is performed, a clumpy excrement treatment agent may be produced by pelletizing a fine powder by rolling with a high pressure applied with a roller compactor, and tableting a mixture of the pelletized product and a binder (binding agent). In consideration of mass production, a tablet press (Model AP18-SS or the like) manufactured by Hata Tekkosho Co., Ltd. is preferably used. In this case, a mortar and pestle has a diameter of about 13 mm, and the number of stations is about 18. Such a tablet press is preferably used because the production can be performed by preparing and mixing raw materials in a desired ratio, and tableting, with the tablet press, the mixed raw materials in a rotating manner with the mixed raw materials put in a hopper of the tablet press.

In one embodiment of the present invention, the excrement treatment agent is produced with a continuous rotary tablet press.

As described above, the method for producing an excrement treatment agent (clumpy excrement treatment agent) is not particularly limited . The excrement treatment agent may be produced by mixing the constituent components in an arbitrary order, or may be produced by mixing and tableting desired components including a binder.

In one embodiment of the present invention, treated excrement can be provided by treating excrement with the excrement treatment agent. A specific treatment method is not particularly limited, and a method in which excrement and the excrement treatment agent are contacted with each other is suitably employed. In one embodiment of the present invention, a method in which the excrement treatment agent is added to excrement is employed. After the addition, the resultant may be allowed or left to stand, or the excrement and the excrement treatment agent may be mixed with each other. In one embodiment of the present invention, the excrement and the excrement treatment agent are homogeneously mixed with each other.

In one embodiment of the present invention, the amount of the excrement treatment agent with respect to excrement (for example, about 125 to about 350 g of feces and about 150 to 500 g of urine) can be appropriately adjusted as necessary, and is, as a reference, 3 to 300 g, 8 to 200 g, 15 to 180 g, 20 to 150 g, 30 to 100 g, 35 to 80 g, or 40 to 60 g. In one embodiment of the present invention, after adding the excrement treatment agent to excrement (and mixing the resultant if necessary), the resultant may be allowed to left or stand for 5 minutes to 150 days, 120 minutes to 100 days, or 300 minutes to 60 days. Thus, solidification of the treated excrement is easily ensured, and transportability and handleability are improved. The excrement treatment agent of the present invention also has an effect of suppressing a bad odor of excrement for a long period of time.

The treated excrement can be provided as described above.

In one embodiment of the present invention, the treated excrement is subjected to composting in soil containing earthworms. In one embodiment of the present invention, the treated excrement is solidified owing to the action of the excrement treatment agent as described above. The solidification improves handleability and transportability.

In one embodiment of the present invention, the earthworms include *Eisenia fetida.* As described above, earthworms (particularly, *Eisenia fetida*) ingest earth and the like, and excrete granular casting. The casting contains not only humus corresponding to an organic component of the soil and nutrients such as amino acid but also phosphoric acid, calcium and magnesium easily absorbed by crops, and hence is useful for making soil beneficial for plants. In one embodiment of the present invention, as soil allowing earthworms to inhabit therein, not only andosol used in Example but also brown forest soil, alluvial soil, yellow-brown forest soil, red yellow soil, young soil, immature soil, chernozem (black soil), clay illuvial soil, cracked clay soil, and peat soil are suitably used. In one embodiment of the present invention, coconut fiber, rice bran, breadcrumbs, a milk powder and the like may be mixed. In one embodiment of the present invention, the soil containing earthworms and soil for growing a desired plant independently have a pH of 5.0 to 9.0, 5.5 to 8.0, or 5.8 to 7.0. For measuring the pH, water in a weight of 2. 5 times is added per g of the soil (converted to the dried product), and the resultant is shaken before the measurement. In one embodiment of the present invention, 50 to 800 g, 100 to 600 g, or 200 to 500 g of *Eisenia fetida* is contained per kg of the soil. In one embodiment of the present invention, 500 to 8,000 g, 800 to 5,000 g, or 1,000 to 3,000 g of *Eisenia fetida* is contained in 10 kg of the soil.

In one embodiment of the present invention, after the treated excrement is treated with the earthworms, heating is performed. In one embodiment of the present invention, the heating temperature is, for example, 60 to 800°C, 150 to 500°C, or 200 to 400°C. By performing the heating, parasite eggs can be removed, and preventive sterilization for all pathogenic bacteria can be performed. A heating temperature of 60°C corresponds to a temperature utilizing fermentation generally employed in agriculture, and for obtaining the expected effect more definitely, the heating may be performed artificially (with a machine) at a temperature higher than 60°C.

In one embodiment of the present invention, a habitat region where the earthworms inhabit and an excrement region where the treated excrement is disposed are separated from each other . It is preferable that the habitat region where the earthworms inhabit and the excrement region where the treated excrement is disposed are not forcibly stirred. This is because the treated excrement usually contains a large amount of moisture (urine), and hence if the habitat region where the earthworms inhabit and the excrement region where the treated excrement is disposed are mixed by stirring, the amount of moisture in the habitat region where the earthworms inhabit may excessively increase. Therefore, in one embodiment of the present invention, the composting is performed with the habitat region where the earthworms inhabit and the excrement region, provided outside the habitat region, where the treated excrement is disposed.

In one embodiment of the present invention, the treated excrement is disposed in a part of the soil containing earthworms. Thus, the habitat region where the earthworms inhabit and the excrement region, provided outside the habitat region, where the treated excrement is disposed are obtained.

In one embodiment of the present invention, the soil containing earthworms is disposed on soil containing the treated excrement, or the soil containing the treated excrement is disposed on the soil containing earthworms. Thus, the soil containing earthworms and the soil containing the treated excrement are separated from each other in a layered manner, and as a result, the habitat region where the earthworms inhabit and the excrement region, provided outside the habitat region, where the treated excrement is disposed are obtained.

In one embodiment of the present invention, the soil containing the treated excrement is obtained by mixing and stirring the treated excrement with soil. Thus, the treated excrement, used as food for earthworms, is homogeneously dispersed in the soil. Thereafter, the soil containing the treated excrement resulting by mixing and stirring is disposed on the soil containing earthworms, or the soil containing earthworms is disposed on the soil containing the treated excrement resulting by mixing and stirring. In this manner, the soil containing earthworms and the mixed soil containing the treated excrement are separated from each other in a layered manner, and as a result, the habitat region where the earthworms inhabit and the excrement region, provided outside the habitat region, where the treated excrement is disposed are obtained.

Since the habitat region where the earthworms inhabit is ensured in performing the composting as described above, the earthworms can live a life in which the earthworms prey on the treated excrement when hungry, and return to the habitat region when full.

In one embodiment of the present invention, the soil corresponding to the habitat region of the earthworms is an environment under which the total amount of the earthworms become 0.5 times or more, 0.6 times or more, 0.7 times or more, 0.8 times or more, 0.9 times or more, 1 time or more, more than 1.0, 1.1 or more, 1.2 times or more, 1.5 times or more, or 2.0 times or more of the initial total amount of the earthworms 30 days after the earthworms are contained in the soil.

In one embodiment of the present invention, the soil for growing a plant in which a plant can grow is suitable, and it is suitable if at least a desired plant can grow in the soil.

In one embodiment of the present invention, the soil containing earthworms does not contain a substance not preyed by the earthworms as far as possible. Examples of the substance not preyed by the earthworms include garbage containing seasoning (in a large amount, in particular), seasoning (strong seasoning, in particular), an oil, and citrus fruits (their peels, in particular) . When the substance not preyed by the earthworms is unavoidably contained, the amount is, for example, preferably 200 g or less, 100 g or less, 50 g or less, or 30 g or less per kg of the soil. In one embodiment of the present invention, when the substance not preyed by the earthworms is unavoidably contained, the amount is, for example, 25 g or less, 20 g or less, 15 g or less, or 5 g or less per 100 g of the earthworms.

In one embodiment of the present invention, the soil further contains at least one of a larva of *Hermetia illucens* and *Enchytraeidae.* In one embodiment of the present invention, *Enchytraeidae* is contained in an amount of 10 to 600 g, 50 to 500 g, or 100 to 300 g per kg of the soil. In one embodiment of the present invention, a larva of *Hermetia illucens* is contained in an amount of 10 to 700 g, 30 to 600 g, or 50 to 500 g per kg of the soil.

In one embodiment of the present invention, vermicompost obtained through composting in the soil containing earthworms may be directly used as soil for growing a plant, or may be used as a fertilizer. When the vermicompost is used as a fertilizer, the amount thereof to be used is preferably 0.1 to 5000 mg, 1 to 1000 mg, 10 to 500 mg, or 15 to 200 mg with respect to the total amount of soil used for growing a plant.

### EXAMPLES

The present invention will now be more specifically described with reference to Examples and Comparative Examples, and it is noted that the present invention should not be interpreted as being limited to these Examples and Comparative Examples, and that Examples resulting from appropriate combinations of technical means disclosed in the Examples are embraced in the scope of the present invention. It is noted that measurement was performed under conditions of room temperature (20 to 25°C) and a relative humidity RH of 50 ± 5% unless specifically stated.

### [Composting Experiment]

### <Example 1>

250 g of feces and 300 g of urine of a male in his forties were placed in a plastic vessel having a sufficient size.

Subsequently, excrement consisting of the feces and the urine was treated by adding, in an arbitrary order thereto, respective components of an excrement treatment agent having a composition shown in Table 1, and thus, treated excrement was provided. The treated excrement having been treated by adding the excrement treatment agent thereto was solidified owing to the action of the excrement treatment agent (an absorbent polymer, in particular).

On the other hand, about 200 g of *Eisenia fetida* was put into about 1 kg of earth (a mixture of andosol (Kanuma City, Tochigi Pref.) and coconut fiber, having pH of about 6.2) to provide soil containing *Eisenia fetida.* It is noted that the soil was confirmed as soil in which the amount of *Eisenia fetida* increased by twice when left to stand for about 30 days to about 45 days after putting *Eisenia fetida* thereinto. Subsequently, a shallow hole was dug in the soil containing earthworms, the solidified treated excrement was disposed in the hole, and the hole was covered with the dug earth. In this manner, a habitat region where the earthworms inhabit and an excrement region, provided outside the habitat region, where the treated excrement is disposed were separated from each other, and then, the resultant was left to stand.

### <Examples 2, 3, 6, 7 and 10>

In each of Examples 2, 3, 6, 7 and 10, the experiment was performed in the same manner as in Example 1 except that the composition of the treatment agent was changed as shown in Table 1.

### <Examples 4 and 5>

In each of Examples 4 and 5, the components having a composition shown in Table 1 were put in a mortar of a desk-top tablet press (manufactured by Kikusui Seisakusho Ltd.), and tableted under a pressure of 40 kN to obtain a clumpy excrement treatment agent. It is noted that a pestle used was an upper and lower plate type pestle having a diameter of 15 mm.

Then, the experiment was performed in the same manner as in Example 1 except that the treatment agent of Example 1 was changed to the clumpy excrement treatment agent of Example 4 or 5.

### <Example 8>

The experiment was performed in the same manner as in Example 2 except that about 200 g of *Eisenia fetida* and 120 g of a larva of *Hermetia illucens* were put into about 1 kg of earth instead that about 200 g of *Eisenia fetida* was put into about 1 kg of earth.

### <Example 9>

The experiment was performed in the same manner as in Example 2 except that about 200 g of *Eisenia fetida* and 120 g of *Enchytraeidae* were put into about 1 kg of earth instead that about 200 g of *Eisenia fetida* was put into about 1 kg of earth.

### <Comparative Example 1>

In Comparative Example 1, a blank experiment in which neither *Eisenia fetida* nor the excrement treatment agent was used in Example 1 was performed.

### <Comparative Examples 2 and 3>

In each of Comparative Examples 2 and 3, the experiment was performed in the same manner as in Example 1 except that "about 250 g of feces and 300 g of urine" used in Example 1 was changed to "300 g of water", and that the composition of the treatment agent was changed as shown in Table 1.

### <Comparative Example 4>

In Comparative Example 4, the experiment was performed in the same manner as in Example 1 except that the treated excrement was not used.

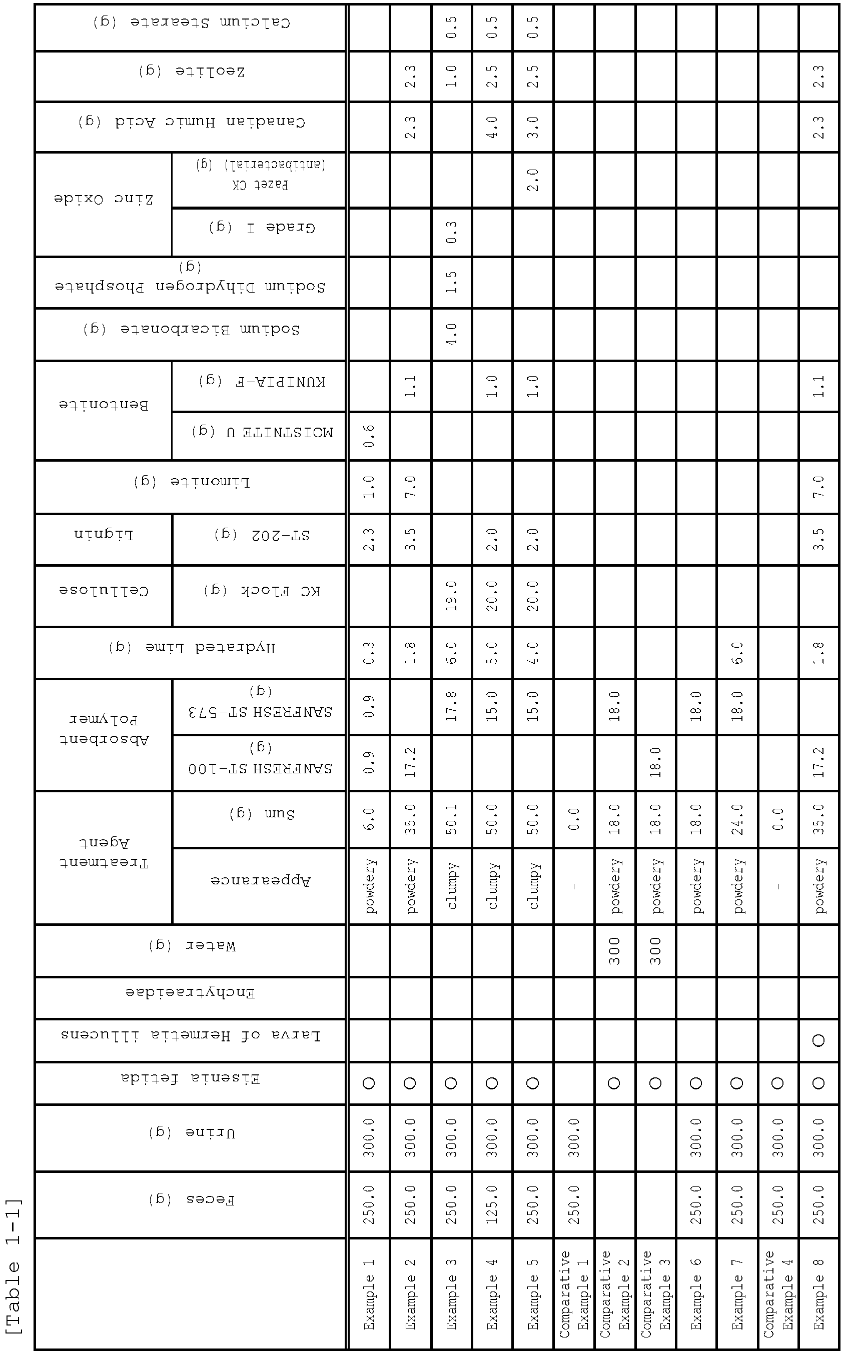

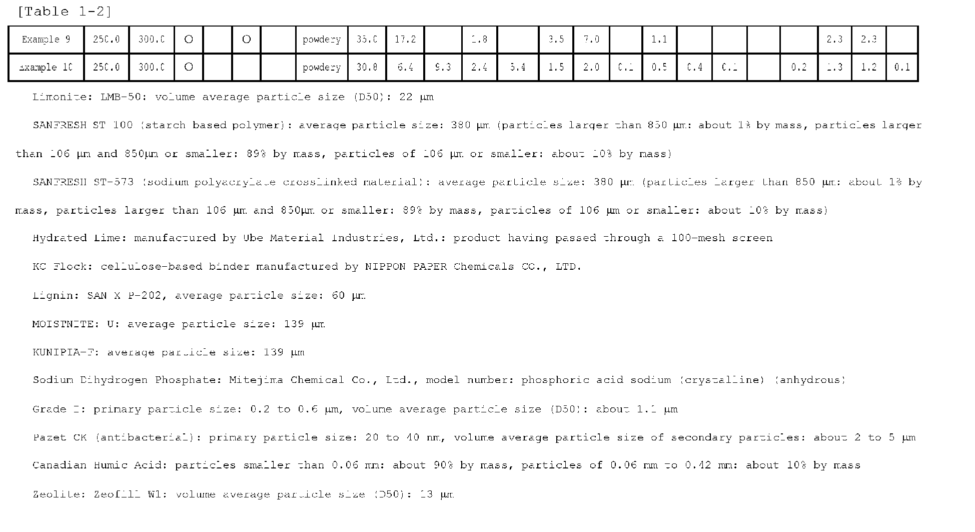

**[Table 2]**

| | Residue | Number of Days |
|---|---|---|
| | | |
| Example 1 | ○ | 10 |
| Example 2 | ○ | 12 |
| Example 3 | ○ | 10 |
| Example 4 | ○ | 7 |
| Example 5 | ○ | 10 |
| Comparative Example 1 | × | 30 |
| Comparative Example 2 | × | 16 |
| Comparative Example 3 | × | 16 |
| Example 6 | ○ | 12 |
| Example 7 | ○ | 10 |
| Comparative Example 4 | - | - |
| Example 8 | ○ | 6 |
| Example 9 | ○ | 6 |
| Example 10 | ○ | 12 |

### [Results]

First, in the Examples, it was observed that the earthworms (*Eisenia fetida,* in particular) moved between the habitat region and the excrement region. This observation result suggests that the earthworms use the habitat region as a habitat and the excrement region as a feeding ground.

Besides, the results examined on a residue are shown in Table 2. The "residue" shown in Table 2 refers to a solid content derived from at least one of the feces and the treatment agent. When the residue became invisible, the corresponding soil was evaluated as "good", and when the residue was visible, the soil was evaluated as "poor". Besides, the "number of days" shown in Table 2 refers to the number of days necessary until the solid content became invisible when the soil was evaluated as "good", and when the soil was evaluated as "poor", the residue was visible even the number of days shown in the table had elapsed. Besides, "-" shown in the column of the residue means that the amount of moisture was large and the soil looked like sludge, and hence a solid content could not be observed.

As shown in Table 2, the residue became invisible within about 10 days in employing the configuration of the Examples . This reveals an astonishing result that the earthworms basically preyed on not only the feces but also the excrement treatment agent. As a result, high quality composting could be performed. It is noted that [Growing Test] described below shows, using the treatment agent of Example 10, that high quality composting could be performed.

On the other hand, Comparative Example 1 is an example in which neither earthworms nor the excrement treatment agent was used (namely, an example for checking whether or not feces could be decomposed only through the action of earth), and it was confirmed that a solid content derived from feces and the treatment agent was not decomposed within a prescribed time period only through the action of earth. This also reveals that high quality composting cannot be performed since earthworms are not used. Besides, Comparative Examples 2 and 3 are examples in which the excrement was changed to water, and even after elapse of 12 days, there remained a residue of the solid content derived from the treatment agent (namely, the solid content of the absorbent polymer) . This suggests that *Eisenia fetida* does not care for preying on the absorbent polymer. This reveals that components as a compost are insufficient because excrement is not used, and hence high quality composting cannot be performed. Besides, Comparative Example 4 is an example in which the treated excrement was not used. Since the excrement treatment agent was not used, an environment close to that within a tank for human wastes in a temporary toilet was obtained. When such excrement was added to the soil containing earthworms, the environment in the soil was largely changed, and hence the habitat region and the excrement region became undistinguishable from each other. As a result, a large number of earthworms died, namely, the composting using earthworms was not performed.

On the basis of the above-described results of the experiment, an astonishing fact that *Eisenia fetida* likes to prey on excrement as well as likes to prey on an excrement treatment agent not present in nature (containing components not derived from nature) if together with excrement. Besides, even when excrement in the environment of a temporary toilet is to be simply subjected to composting in soil containing earthworms as in Comparative Example 4, the expected effect cannot be obtained.

As described so far, according to the configuration of the present invention, composting using earthworms of excrement stored under a nonflushing environment such as a temporary toilet can be realized.

In one embodiment of the present invention, 200 to 500 g of *Eisenia fetida,* and if necessary, at least one of 120 to 300 g of a larva of *Hermetia illucens* and 100 to 250 g of *Enchytraeidae* are put into 1 kg to 10 kg (or 1 kg to 5 kg) of earth (a mixture of andosol and coconut fiber, having a pH of about 6.2) to produce soil containing earthworms, a hole is dug in the soil containing earthworms, treated excrement is disposed in the hole, and the hole is covered with the dug earth. Under these conditions, the residue becomes invisible within 15 days, within 14 days, within 13 days, within 12 days, within 11 days, within 10 days, within 9 days, within 8 days, or within 7 days.

### [Growing Test of Japanese Mustard Spinach (Nanane in Japanese)]

### (1) Preparation of Soil

First, soil shown in Table 3 below was provided.

### [Table 3]

**Table 3**

| Collection Site | Type of Soil | Soil Texture | Alluvial Soil or Diluvial Soil | pH (H₂O) | Exchange Acidity *y₁* | Electrical Conductivity (EC) dS/m | Cation Exchange Capacity (CEC) meg/100 g of dry soil | Bulk Density of Air-dried Soil g/mL | Maximum Water Retention Capacity of Dry Soil wt% |
|---|---|---|---|---|---|---|---|---|---|
| Kanuma City, Tochigi Pref. | Andosol | SiL | Diluvial Soil | 5.9 | 0.8 | 0.49 | 34.2 | 0.90 | 119 |

| | | | | | | | | | |
|---|---|---|---|---|---|---|---|---|---|
| note) Less than 1% of garden lime added for pH adjustment. | | | | | | | | | |

### (2) Design of Experimental Plots and Compost

Subsequently, a compost (fertilizer) obtained by subjecting the soil to composting using the treatment agent of Example 10 was spread in each amount shown in Table 4 below (amount of soil in each pot = about 20.8 kg). It is noted that earthworms had been removed for test. It is noted that the compost had a readily available moisture (pH 1.8 to 3.0, volume fraction) obtained by a plate pressing method of about 9.5%, and thus had a relatively low water retention property. The fact that water absorption of the soil containing the absorbent polymer having a considerably high water retention property was thus largely deteriorated suggests that the absorbent polymer had been decomposed (broken) by the earthworms. Here, the readily available moisture (pH 1.5 to 2.7, volume fraction) of the absorbent polymer by itself is about 5320%, and becomes about 70.7% when the absorbent polymer is added to the soil in an amount of 1% by mass, becomes about 37.7% when added in an amount of about 0.1% by mass, and becomes about 35.2% when added in an amount of about 0.01% by mass. In this manner, the readily available moisture of the soil can be remarkably improved by simply adding a small amount of the absorbent polymer to the soil, but as described above, the readily available moisture of the present vermicompost was about 9.5% and thus comparatively low, which suggests that the structure of the absorbent polymer had been broken through the action of the earthworms. It is noted that the readily available moisture of the soil by itself can be appropriately adjusted by separately adding the absorbent polymer, and hence, appropriate addition may be examined in growing a plant.

### [Table 4]

**Table 4**

| | Amount Added | T-N | T-P₂O₅ | T-K₂O |
|---|---|---|---|---|
| | (mg/pot) | | | |
| Reference Amount Application Plot | 20.83 | about 125 or more | about 100 or more | about 102 or more |
| 2-fold Application Plot | 41.67 | about 225 or more | about 175 or more | about 179 or more |
| 3-fold Application Plot | 62.50 | about 325 or more | about 250 or more | about 256 or more |
| 4-fold Application Plot | 83.33 | about 425 or more | about 325 or more | about 333 or more |
| Non-application Plot | - | 25 | 25 | 25 |

| | | | | |
|---|---|---|---|---|
| note) 1. Since N contained in a test fertilizer was 2% or more in terms of dry matter, the amount applied in each test plot was set based on N% of the fertilizer. Since a moisture content was large, the application was performed after air drying. | | | | |

2. In each of test fertilizer application plots and non-application plot, ammonia sulfate, calcium superphosphate and potassium oxide were applied in amounts respectively corresponding to 25 mg of N, P₂O₅ and K₂O.

As a result, the values of all items of nitrogen, phosphoric acid and potassium (potassium oxide) increased in a plot where the fertilizer was spread (an example) as compared with those in a non-application plot (a comparative example).

### (3) Growing Method and Management Situation

Next, a growing method and management situation were as follows .

This test was performed in accordance with "Method of Growing Test regarding Harm to Plants (Shokubutsu ni taisuru Gai ni kansuru Saibai Shiten no Hoho in Japanese) " (Notice from Head of Agricultural Production Bureau, Ministry of Agriculture, Forestry and Fisheries, No. 59-APB 1943 of April 18, 1984). During the test period, the soil was replenished with a reduced amount of moisture so that the moisture therein could be kept at 50 to 60% of the maximum water retention capacity. During the test period, the growing temperature was kept at 18 to 25° in a growth chamber. It is noted that additional fertilization and pesticide application were not performed.

Specifically, soil filling, fertilization, and sowing of Japanese mustard spinach (Nanane in Japanese) seeds were performed on the same day, and harvest was performed 3 weeks later. The result is indicated, assuming that the length (cm) of a leaf obtained in the non-application plot (comparative example) was 1, how many times or more the length (cm) of a leaf obtained in the Example using the compost (fertilizer) became. It is noted that a germination rate on day 4 was 80% or more (particularly, 85% in a 2-fold application plot, a 3-fold application plot and a 4-fold application plot). Besides, Japanese mustard spinach had abnormal symptom at the time of harvest in none of the plots.

[Table 5]

**Table 5**

| | | |
|---|---|---|
| Test Plot | Ratio | Abnormal Symptom |
| Reference Amount Application Plot | 1.05 times or more | none |
| 2-fold Application Plot | 1.06 times or more | none |
| 3-fold Application Plot | 1.05 times or more | none |
| 4-fold Application Plot | 1.07 times or more | none |
| Non-application Plot | 1 | |

As shown in Table 6, the leaves of Japanese mustard spinach were well grown in all the plots using the compost (fertilizer).

## Claims

1. A method for producing vermicompost, comprising:
a step of treating excrement with an excrement treatment agent to provide treated excrement; and
a step of subjecting the treated excrement to composting in soil containing earthworms.

2. The production method according to claim 1, wherein the earthworms include *Eisenia fetida.*

3. The production method according to claim 1 or 2, wherein the treated excrement is solidified.

4. The production method according to any one of claims 1 to 3, wherein the composting is performed having a habitat region where the earthworms inhabit and an excrement region, provided outside the habitat region, where the treated excrement is disposed.

5. The production method according to any one of claims 1 to 4, wherein the excrement treatment agent contains at least one selected from the group consisting of an absorbent polymer, hydrated lime, limestone, sodium bicarbonate, zeolite, lignin, an acidic solid substance, phosphate, bentonite, limonite, an oxidized metal and a sulfurized metal.

6. The production method according to any one of claims 1 to 5, wherein the excrement treatment agent contains an absorbent polymer.

7. The production method according to any one of claims 1 to 6, wherein the soil further contains at least one of a larva of *Hermetia illucens* and *Enchytraeidae.*
